# EUROPÄISCHE PATENTSCHRIFT

(11) **EP 1 787 844 B1**
(45) Veröffentlichungstag und Bekanntmachung des Hinweises auf die Patenterteilung: **05.09.2012**
(21) Anmeldenummer: 06023180.0
(22) Anmeldetag: 08.11.2006
(51) Int. Cl.: B60K 7/00, B60K 17/04, F16H 57/02

(54) **Antrieb für ein Flurförderfahrzeug**
Lift truck drive
Entraînement d'un chariot élévateur

(30) Priorität: 22.11.2005 DE 102005055567
(43) Veröffentlichungstag der Anmeldung: 23.05.2007
(73) Patentinhaber: ZF Friedrichshafen AG, 88038 Friedrichshafen (DE)
(72) Erfinder: Scharfenberg, Stephan, 99869 Tüttleben (DE); Bald, Dirk, 99867 Gotha (DE); Streipardt, Peter, 99880 Waltershausen (DE)

(56) Entgegenhaltungen:
- WO-A1-2005/077695
- DE-A1- 19 633 316
- DE-A1- 19 826 067
- DE-A1-102004 006 722
- GB-A- 2 105 665
- US-A1- 2003 006 084

## Beschreibung

Die Erfindung betrifft einen Antrieb für ein Flurförderzeug nach der im Oberbegriff von Anspruch 1 näher definierten Art.

Die DE 198 26 067 A1 offenbart einen gattungsgemäßen Antrieb für ein Flurförderzeug, bei welchem ein elektrischer Antriebsmotor ein Stirnradgetriebe antreibt, welches über ein Kegelradgetriebe ein Antriebsrad des Fahrzeugs antreibt. Da sich das Stirnradgetriebe oberhalb des Fahrzeugrades befindet und der elektrische Antriebsmotor im Fahrzeug senkrecht eingebaut ist, ist der Antrieb fast vollständig mit Schmiermittel zu füllen, um eine ausreichende Schmierung für das Stirnradgetriebe und Dichtmittel im Antriebsmotor zu gewährleisten. Dies führt zur Erwärmung des Schmiermittels infolge Planschverluste im Getriebe. Durch die Ausdehnung des Schmiermittels und den geringen verbleibenden Ausdehnungsraum besteht die Gefahr des Schmiermittelaustritts in die Umgebung.

Der vorliegenden Erfindung liegt die Aufgabe zugrunde, einen Antrieb für ein Flurförderzeug zu schaffen, welcher betriebssicher ohne Schmiermittelaustritt in die Umgebung betrieben werden kann.

Die Aufgabe wird mit einem, auch die kennzeichnenden Merkmale des Hauptanspruchs aufweisenden, gattungsgemäßen Antrieb für ein Flurförderzeug gelöst.

Erfindungsgemäß weist der Antrieb ein Stirnradgetriebe auf, welches von einem Antriebsmotor angetrieben wird, welcher vorzugsweise elektrisch ausgeführt ist, wobei das Stirnradgetriebe ein Kegelradgetriebe antreibt, dessen Tellerrad direkt die Nabe des Fahrzeugrades antreibt. Das Stirnradgetriebe ist oberhalb der Lauffläche des Antriebsrades und der Antriebsmotor ist senkrecht angeordnet. Das Stirnradgetriebe und das Kegelradgetriebe befinden sich in einem Getriebegehäuse, welches ein- oder mehrteilig ausgeführt sein kann. Zwischen dem Stirnradgetriebe und dem Kegelradgetriebe sind Dichtmittel angeordnet, welche das Getriebegehäuse in zwei Flüssigkeitsräume trennen, wobei das Stirnradgetriebe in einem der beiden Flüssigkeitsräume und das Kegelradgetriebe in dem anderen der beiden Flüssigkeitsräume angeordnet ist. Das Dichtmittel kann als Radialwellendichtring ausgeführt sein, welcher benachbart zum Ritzel des Kegelradgetriebes angeordnet ist. Es besteht die Möglichkeit, den Radialwellendichtring zwischen der Lagerung und der Verzahnung des Ritzels anzuordnen, es besteht jedoch auch die Möglichkeit, den Radialwellendichtring unmittelbart benachbart zur Lagerung, welche das Ritzel lagert, anzuordnen. Durch die Schaffung von zwei Schmiermittelräumen besteht die Möglichkeit, die Oberfläche des Schmiermittels im Raum, in welchem das Stirnradgetriebe angeordnet ist, im Bereich der Verzahnung des Stirnradgetriebes anzuordnen und die Oberfläche des Schmiermittels im Raum, in welchem sich das Kegelradgetriebe befindet, unterhalb der Drehachse des Tellerrades des Kegelradgetriebes anzuordnen. Da sich nun in jedem Schmiermittelraum eine geringere Menge an Schmiermittel befindet, ist der Ausdehnungsraum, welcher sich oberhalb der Oberfläche des Schmiermittels befindet, ausreichend, um die Volumenänderung infolge der Erwärmung des Schmiermittels auszugleichen. Indem der Raum, in welchem sich das Tellerrad befindet, nicht mehr vollständig mit Schmiermittel gefüllt ist, erwärmt sich das Schmiermittel weniger, da die Verluste sich verringern. Ebenso besteht die Möglichkeit, durch Schaffung von zwei getrennten Schmiermittelräumen das jeweilige optimale Schmiermittel für den jeweiligen Einsatz Stirnradgetriebe bzw. Kegelradgetriebe vorzugsweise mit Hypoid-Versatz zu verwenden.

Weitere Merkmale sind der Figuren-Beschreibung zu entnehmen.

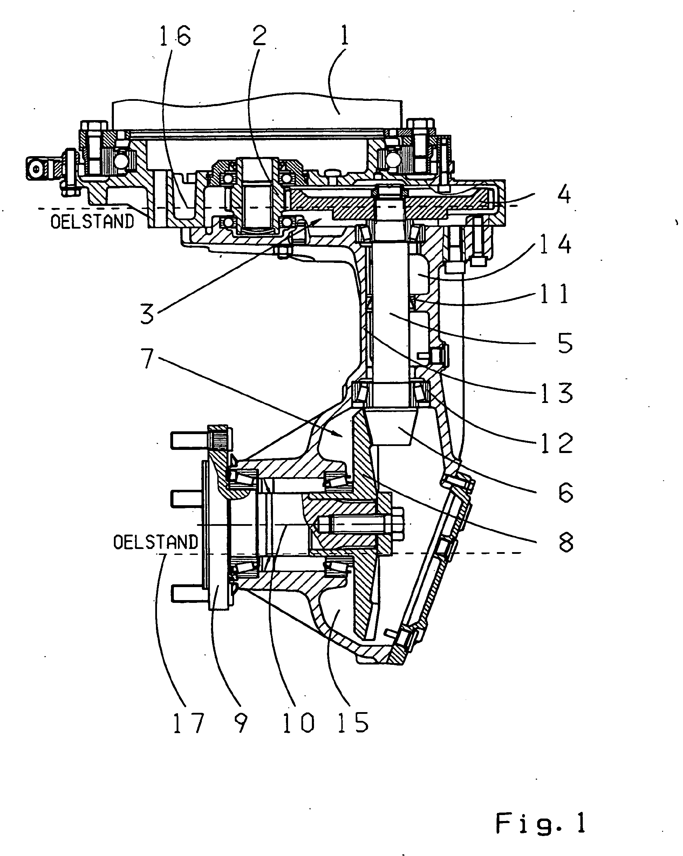

Die einzige Figur zeigt einen Antrieb für ein Flurförderzeug, bei welchem ein Antriebsmotor 1, welcher vorzugsweise elektrisch ausgeführt ist, ein erstes Stirnrad 2 eines Stirnradgetriebes 3 antreibt. Das erste Stirnrad 2 treibt ein zweites Stirnrad 4 an, welches eine Welle 5, welche mit einem Ritzel 6 eines Kegelradgetriebes 7 verbunden ist, antreibt. Das Ritzel 6 treibt ein Tellerrad 8 an, welches einen Nabe 9 antreibt, welche mit einem nicht gezeigten Fahrzeugrad in Verbindung steht. Das Tellerrad 8 dreht sich um die Drehachse 10. Ein Radialwellendichtring 11 ist benachbart zum Ritzel 6, unmittelbar benachbart zum Lager 12, angeordnet und dichtet das Getriebegehäuse 13 zur Welle 5 ab. Durch diese Abdichtung entstehen ein erster Raum 14 und ein zweiter Raum 15, in welchen sich Schmiermittel befindet. Die Oberfläche 16 des Schmiermittels im ersten Raum 14 ist im Bereich der Verzahnung des ersten Stirnrades 2 angeordnet. Die Oberfläche 17 des zweiten Raums 15 ist unterhalb der Drehachse 10 des Tellerrades 8 angeordnet.

### Bezugszeichen

- 1: Antriebsmotor
- 2: erstes Stirnrad
- 3: Stirnradgetriebe
- 4: zweites Stirnrad
- 5: Welle
- 6: Ritzel
- 7: Kegelradgetriebe
- 8: Tellerrad
- 9: Nabe
- 10: Drehachse
- 11: Radialwellendichtring
- 12: Lager
- 13: Getriebegehäuse
- 14: erster Raum
- 15: zweiter Raum
- 16: Oberfläche
- 17: Oberfläche

## Patentansprüche

1. Antrieb für ein Flurförderzeug, bei welchem ein Antriebsmotor (1) ein Stirnradgetriebe (3) antreibt, welches ein Kegelradgetriebe (7) mit einem Ritzel (6) und einem Tellerrad (8) antreibt, wobei das Tellerrad (8) mit einer Nabe (9) zum Antrieb eines Fahrzeugrades verbunden ist, wobei das Kegelradgetriebe (7) und das Stirnradgetriebe (3) in einem Getriebegehäuse (13) angeordnet sind, **dadurch gekennzeichnet, dass** benachbart zum Ritzel (6) Dichtmittel (11) angeordnet sind, welche das Getriebegehäuse (13) in zwei flüssigkeitsgetrennte Räume (14, 15) trennen, wobei das Kegelradgetriebe (7) in einem dieser Räume (15) und das Stirnradgetriebe (3) in dem anderen dieser Räume (14) angeordnet ist, und jeder dieser Räume (14,15) teilweise mit Schmiermittel gefüllt ist.

2. Antrieb für ein Flurförderzeug nach Anspruch 1, **dadurch gekennzeichnet, dass** ein Radialwellendichtring (11) zur Trennung der Räume (14, 15) zwischen dem Getriebegehäuse (13) und der Welle (5) des Ritzels (6) angeordnet ist.

3. Antrieb für ein Flurförderzeug nach Anspruch 1, **dadurch gekennzeichnet, dass** die Räume (14, 15) jeweils über einen Entlüfter mit der Umgebung verbunden sind.

4. Antrieb für ein Flurförderzeug nach Anspruch 1, **dadurch gekennzeichnet, dass** die Schmiermitteloberfläche (16) im Raum des Stirnradgetriebes (3) sich im Bereich der Verzahnung des Stirnradgetriebes (3) befindet.

5. Antrieb für ein Flurförderzeug nach Anspruch 1, **dadurch gekennzeichnet, dass** die Schmiermitteloberfläche (17) im Raum des Kegelradgetriebes (7) sich im Bereich unterhalb der Drehachse (10) des Tellerrades (8) befindet.

6. Antrieb für ein Flurförderzeug nach Anspruch 1, **dadurch gekennzeichnet, dass** die Schmiermittel der beiden Räume (16, 17) unterschiedlich sind.

## Claims

1. Drive for an industrial truck, in which a drive motor (1) drives a spur gear mechanism (3) which drives a bevel gear mechanism (7) with a pinion (6) and a ring gear (8), the ring gear (8) being connected to a hub (9) for driving a vehicle wheel, the bevel gear mechanism (7) and the spur gear mechanism (3) being arranged in a gear housing (13), **characterized in that** sealing means (11) are arranged adjacently to the pinion (6), which sealing means (11) divide the gear housing (13) into two spaces (14, 15) which are separated in liquid terms, the bevel gear mechanism (7) being arranged in one of the said spaces (15) and the spur gear mechanism (3) being arranged in the other of the said spaces (14), and each of the said spaces (14, 15) being filled partially with lubricant.

2. Drive for an industrial truck according to Claim 1, **characterized in that**, in order to separate the spaces (14, 15), a radial shaft seal (11) is arranged between the gear housing (13) and the shaft (5) of the pinion (6).

3. Drive for an industrial truck according to Claim 1, **characterized in that** the spaces (14, 15) are connected in each case to the surroundings via a breather means.

4. Drive for an industrial truck according to Claim 1, **characterized in that** the lubricant surface (16) in the space of the spur gear mechanism (3) is situated in the region of the toothing of the spur gear mechanism (3).

5. Drive for an industrial truck according to Claim 1, **characterized in that** the lubricant surface (17) in the space of the bevel gear mechanism (7) is situated in the region below the rotational axis (10) of the ring gear (8).

6. Drive for an industrial truck according to Claim 1, **characterized in that** the lubricants of the two spaces (16, 17) are different.

## Revendications

1. Entraînement pour un chariot élévateur, dans lequel un moteur d'entraînement (1) entraîne une transmission à engrenages droits (3), qui entraîne une transmission à pignons coniques (7) avec un pignon (6) et une couronne de différentiel (8), la couronne de différentiel (8) étant reliée à un moyeu (9) pour l'entraînement d'une roue du véhicule, la transmission à pignons coniques (7) et la transmission à engrenages droits (3) étant disposées dans un boîtier de transmission (13), **caractérisé en ce que** des moyens d'étanchéité (11) sont disposés à côté du pignon (6), lesquels divisent le boîtier de transmission (13) en deux espaces séparés par un liquide (14, 15), la transmission à pignons coniques (7) étant disposée dans l'un de ces espaces (15) et la transmission à engrenages droits (3) étant disposée dans l'autre de ces espaces (14), et chacun de ces espaces (14, 15) étant partiellement rempli de lubrifiant.

2. Entraînement pour un chariot élévateur selon la revendication 1, **caractérisé en ce qu'**un joint à lèvre radial (11) pour diviser les espaces (14, 15) est disposé entre le boîtier de transmission (13) et l'arbre (5) du pignon (6).

3. Entraînement pour un chariot élévateur selon la revendication 1, **caractérisé en ce que** les espaces (14, 15) sont à chaque fois connectés à l'environnement par le biais d'un dispositif d'évacuation d'air.

4. Entraînement pour un chariot élévateur selon la revendication 1, **caractérisé en ce que** la surface du lubrifiant (16) dans l'espace de la transmission à engrenages droits (3) se trouve dans la région de la denture de la transmission à engrenages droits (3).

5. Entraînement pour un chariot élévateur selon la revendication 1, **caractérisé en ce que** la surface de lubrifiant (17) dans l'espace de la transmission à pignons coniques (7) se trouve dans la région sous l'axe de rotation (10) de la couronne de différentiel (8).

6. Entraînement pour un chariot élévateur selon la revendication 1, **caractérisé en ce que** les lubrifiants des deux espaces (16, 17) sont différents.
